# EUROPEAN PATENT SPECIFICATION

(11) **EP 4 239 440 B1**
(45) Date of publication and mention of the grant of the patent: **15.04.2026**
(21) Application number: 21900866.1
(22) Date of filing: 16.11.2021
(51) Int. Cl.: G06F 1/16, G06F 1/32, G06F 1/3234

(54) **ELECTRONIC DEVICE COMPRISING FLEXIBLE DISPLAY, AND METHOD FOR CAPTURING IMAGE IN ELECTRONIC DEVICE**
ELEKTRONISCHE VORRICHTUNG MIT FLEXIBLER ANZEIGE UND VERFAHREN ZUR ERFASSUNG EINES BILDES IN DER ELEKTRONISCHEN VORRICHTUNG
DISPOSITIF ÉLECTRONIQUE COMPRENANT UN DISPOSITIF D'AFFICHAGE FLEXIBLE ET PROCÉDÉ DE CAPTURE D'IMAGE DANS UN DISPOSITIF ÉLECTRONIQUE

(30) Priority: 03.12.2020 KR 20200167389; 01.02.2021 KR 20210014312
(43) Date of publication of application: 06.09.2023
(73) Proprietor: Samsung Electronics Co., Ltd., Suwon-si, Gyeonggi-do 16677 (KR)
(72) Inventor: KIM, Manho, Suwon-si, Gyeonggi-do 16677 (KR); LEE, Kyeongeun, Suwon-si, Gyeonggi-do 16677 (KR); LEE, Kihuk, Suwon-si, Gyeonggi-do 16677 (KR); LEE, Jeongyeol, Suwon-si, Gyeonggi-do 16677 (KR); JUNG, Hwajoong, Suwon-si, Gyeonggi-do 16677 (KR)
(74) Representative: HGF
(86) International application number: PCT/KR2021/016756
(87) International publication number: WO 2022/119178

(56) References cited:
- EP-A1- 3 012 732
- EP-A2- 3 531 230
- WO-A1-2020/052340
- KR-A- 20140 099 006
- KR-A- 20160 138 748
- KR-A- 20170 098 820
- US-A1- 2017 034 446
- US-A1- 2019 028 650
- US-A1- 2020 099 856

## Description

### [Technical Field]

Various embodiments relate to an electronic device including a flexible display and a method for capturing an image in the electronic device.

### [Background Art]

Various services and additional functions provided by electronic devices, for example, portable electronic devices such as smartphones, have gradually increased. In order to increase the effective value of such electronic devices and satisfy various needs of users, communication service providers or electronic device manufacturers have provided various functions and have competitively developed electronic devices to differentiate the same from those of other companies. Accordingly, various functions provided by electronic devices have also gradually become more advanced.

As the demand for mobile communication increases and the degree of integration of electronic devices increases, the portability of electronic devices such as smartphones may be improved, and the convenience in using a multimedia function and the like may be improved. In surfing the web or using a multimedia function, using an electronic device displaying a larger screen may provide convenience to a user. Although a larger display may be mounted on an electronic device to output a larger screen, there may be restrictions on expanding the display size in consideration of the portability of the electronic device. For example, a display using an organic light-emitting diode or the like may secure the portability of an electronic device while providing a larger screen. A display using an organic light-emitting diode (or an electronic device equipped therewith) may implement a stable operation even when manufactured very thinly, and thus the display may be mounted on an electronic device in a foldable, bendable, or rollable form.
EP3531230A2 relates to an electronic device including a first and second housing movable relative to each other. The second housing supports a flexible display which may be at least partially exposed to an exterior and at least partially stowed within the first housing based on the movement of the housings.
US2017/034446A1 relates to a user terminal apparatus which includes a display including a main display area which is disposed on a front surface of the user terminal apparatus, and a sub-display area which extends from one side of the main display area and is disposed on at least one area of a rear surface of the user terminal apparatus, a camera configured to photograph an image, and a processor configured to display a live view acquired through the camera on one of the main display area or the sub display area.
US2020/099856A1 relates to a mobile terminal including triple cameras having first, second and third fields of view, wherein the first field of view is larger than the second field of view which is larger than the third field of view.
EP3012732A1 relates to a mobile terminal by which self-photography can be assisted in a manner of controlling a front camera and a rear camera.

### [Detailed Description of the Invention]

### [Technical Problem]

When an electronic device including a flexible display includes a front camera and a rear camera, there may be a burden on a mounting space, the amount of protrusion of the camera may increase, and the capacity of a battery may increase.

In addition, a front camera module provided in the electronic device including the flexible display may be located at the bottom of the display in the form of a punch hole or an under display camera (UDC), and when the front camera module does not move together according to the movement of the display, several holes are required, and thus the front camera module has a structure that moves together according to the movement of the display. The front camera module which moves along with the movement of the display may overlap a rear camera module to further increase the amount of protrusion of the camera.

In addition, while the rear camera module includes a plurality of various camera lenses, the front camera module basically includes only one camera lens, and thus an image cannot be captured in various photographing modes or through a plurality of camera lenses in a selfie photographing mode using the front camera module.

### [Technical Solution]

The invention is defined in independent claims 1 and 8. Preferred embodiments are defined in the dependent claims.

### [Advantageous Effects]

According to various embodiments, an electronic device including a flexible display can secure a space and reduce the amount of protrusion of a camera as the electronic device does not include a front camera module, and capture an image in various photographing modes or through a plurality of camera lenses in a selfie photographing mode through a rear camera module disposed in the electronic device.

### [Brief Description of Drawings]

FIG. 1 illustrates an electronic device according to various embodiments disclosed herein, and illustrates a state in which a part of a flexible display is received in a second structure.
FIG. 2 illustrates an electronic device according to various embodiments disclosed herein, and illustrates a state in which most of a flexible display is exposed to the outside of a second structure.
FIG. 3 is an exploded perspective view illustrating an electronic device according to various embodiments disclosed herein.
FIG. 4 is a bottom view illustrating a state in which a flexible display of an electronic device according to various embodiments disclosed herein is mounted.
FIG. 5 is a block diagram of an electronic device according to various embodiments.
FIGS. 6A, 6B, 6C, 6D, and 6E are diagrams illustrating an operation of capturing an image in an electronic device according to various embodiments.
FIG. 7 is a diagram illustrating an operation of capturing an image in an electronic device according to various embodiments.
FIG. 8 is a diagram illustrating an operation of controlling a plurality of preview images in an electronic device according to various embodiments.
FIG. 9 is a flowchart illustrating an operation of capturing an image in an electronic device according to various embodiments.
FIG. 10 is a flowchart illustrating an operation of controlling a plurality of preview images in an electronic device according to various embodiments.
FIG. 11 is a block diagram of an electronic device in a network environment according to various embodiments.

### [Mode for Carrying out the Invention]

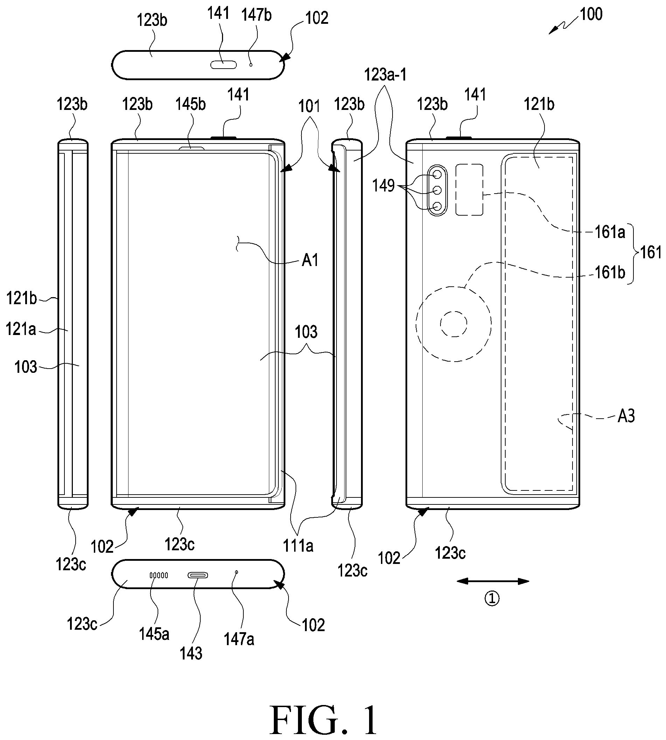

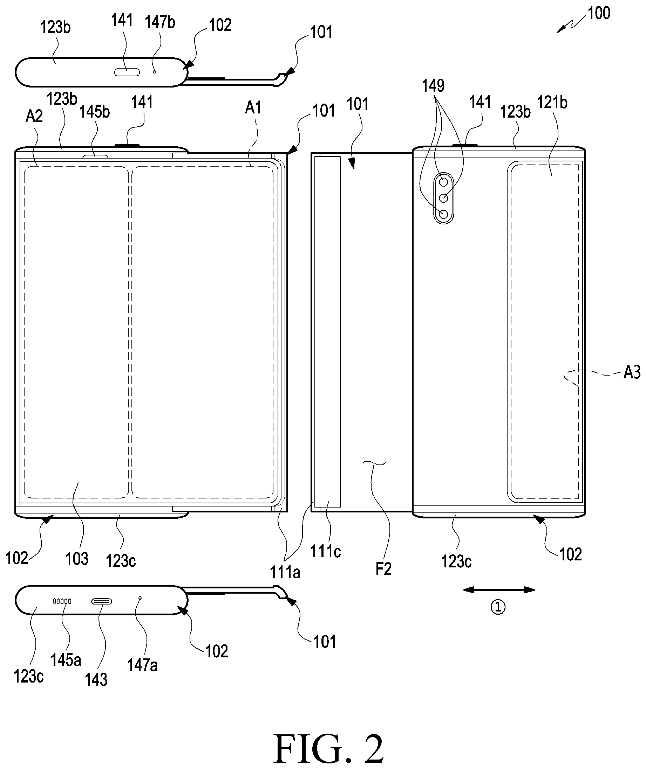

FIG. 1 illustrates an electronic device 100 according to various embodiments disclosed herein, and illustrates a state in which a part (e.g., a second area A2) of a flexible display 103 is received in a second structure 102. FIG. 2 illustrates the electronic device 100 according to various embodiments disclosed herein, and illustrates a state in which most of the flexible display 103 is exposed to the outside of the second structure 102.

The state shown in FIG. 1 may be defined as that a first structure 101 is closed with respect to the second structure 102, and the state shown in FIG. 2 may be defined as that the first structure 101 is opened with respect to the second structure 102. According to an embodiment, a "closed state" or an "open state" may be defined as a state in which an electronic device is closed or opened. The electronic device 100 may include the first structure 101 and the second structure 102 movably disposed in the first structure 101. In some embodiments, it may be understood as a structure in which the first structure 101 is rollably or slidably disposed on the second structure 102 in the electronic device 100. According to an embodiment, the first structure 101 between the closed state and the open state may be disposed to be able to reciprocate in a direction shown with reference to the second structure 102, for example, a direction indicated by an arrow ①.

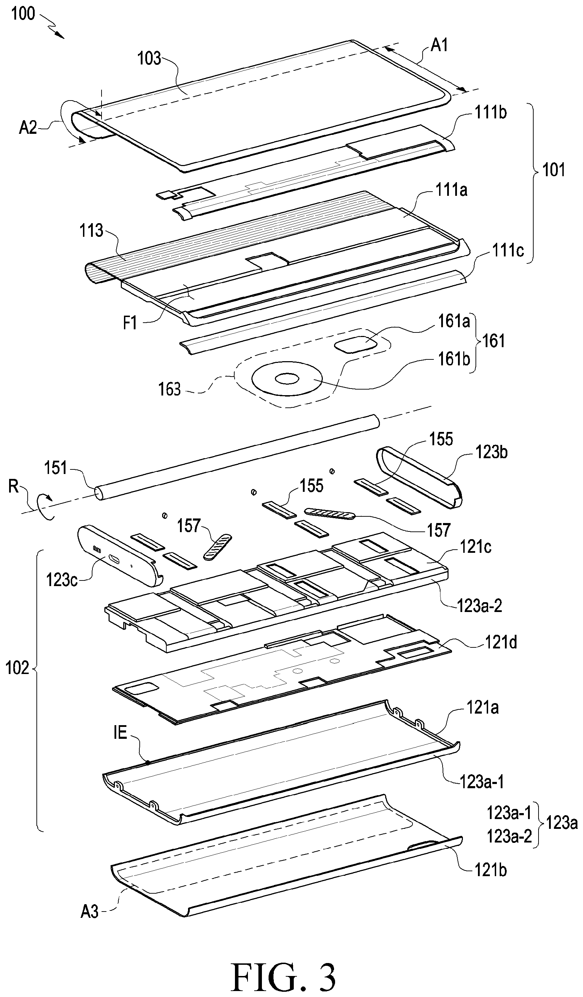

According to various embodiments, the first structure 101 may include a first plate 111a (e.g., a slide plate), and may include a first surface (F1; see FIG. 3) configured to include at least a part of the first plate 111a, and a second surface F2 facing in a direction opposite to the first surface F1. According to an embodiment, the second structure 102 may include a second plate (121a; see FIG. 3) (e.g., a rear case), a first sidewall 123a extending from the second plate 121a, a second sidewall 123b extending from the first sidewall 123a and the second plate 121a, and a third sidewall 123c extending from the first sidewall 123a and the second plate 121a and parallel to the second sidewall 123b, and/or a rear plate 121b (e.g., a rear window). In some embodiments, the second sidewall 123b and the third sidewall 123c may be configured to be perpendicular to the first sidewall 123a. According to an embodiment, the second plate 121a, the first sidewall 123a, the second sidewall 123b, and the third sidewall 123c may be configured to have one side (e.g., a front face) opened to receive (or surround) at least a part of the first structure 101. For example, the first structure 101 may be coupled to the second structure 102 in an at least partially surrounded state, and rollably or slidingly move in a direction parallel to the first surface F1 or the second surface F2, for example, a direction indicated by the arrow ① while being guided by the second structure 102.

According to various embodiments, the second sidewall 123b or the third sidewall 123c may be omitted. According to an embodiment, the second plate 121a, the first sidewall 123a, the second sidewall 123b, and/or the third sidewall 123c may be configured as a separate structure, and thus combined or assembled with each other. The rear plate 121b may be coupled to surround at least a part of the second plate 121a. In some embodiments, the rear plate 121b may be configured substantially integrally with the second plate 121a. According to an embodiment, the second plate 121a or the rear plate 121b may cover at least a part of the flexible display 103. For example, the flexible display 103 may be at least partially received inside the second structure 102, and the second plate 121a or the rear plate 121b may cover a part (e.g., the second area A2) of the flexible display 103 received inside the second structure 102.

According to various embodiments, the first structure 101 can move in an open state and a closed state with respect to the second structure 102 in a first direction (e.g., ① direction) parallel to the second plate 121a (e.g., the rear case) and the second sidewall 123b, and may move such that the first structure 101 is placed at a first distance from the first sidewall 123a in the closed state and is placed at a second distance greater than the first distance from the first sidewall 123a in the open state. In some embodiments, in the case of the closed state, the first structure 101 may be positioned to surround a part of the first sidewall 123a.

According to various embodiments, the electronic device 100 may include the display 103, a key input device 141, a connector hole 143, audio modules 145a, 145b, 147a, and 147b, or a camera module 149. Although not shown, the electronic device 100 may further include an indicator (e.g., an LED device) or various sensor modules.

According to various embodiments, the display 103 may include a first area A1 and a second area A2. In an embodiment, the first area A1 may extend substantially across at least a part of the first surface F1 to be disposed on the first surface F1. The second area A2 may extend from the first area A1 and may be inserted into or received inside the second structure 102 (e.g., a housing) according to a rolling movement or a sliding movement of the first structure 101, or exposed to the outside of the second structure 102. As will be described later, the second area A2 may move while being substantially guided by a roller (151; see FIG. 3) mounted on the second structure 102, and thus be received inside the second structure 102 or exposed to the outside of the second structure. For example, while the first structure 101 rollably or slidingly moves, a part of the second area A2 may be deformed into a curved shape at a position corresponding to the roller 151.

According to various embodiments, when viewed from the top of the first plate 111a (e.g., a slide plate), if the first structure 101 moves from the closed state to the open state, the second area A2 may be gradually exposed to the outside of the second structure 102 to form a substantially flat surface together with the first area A1. The display 103 may be coupled to or disposed adjacent to a touch sensing circuit, a pressure sensor capable of measuring the intensity (pressure) of a touch, and/or a digitizer which detects a magnetic field-type stylus pen. In an embodiment, the second area A2 may be at least partially received inside the second structure 102, and a part of the second area A2 may be exposed to the outside even in the state (e.g., a closed state) shown in FIG. 1. In some embodiments, regardless of the closed state or the open state, the exposed part of the second area A2 may be located on the roller 151, and a part of the second area A2 may maintain a curved shape at a position corresponding to the roller 151.

The key input device 141 may be disposed on the second sidewall 123b or the third sidewall 123c of the second structure 102. In consideration of an external appearance and a use state, the shown key input device 141 may be omitted or the electronic device 100 may be manufactured to include additional key input device(s). In some embodiments, the electronic device 100 may include a key input device which is not shown, for example, a home key button, or a touch pad disposed around the home key button. According to another embodiment, at least a part of the key input device 141 may be located in one area of the first structure 101.

According to various embodiments, the connector hole 143 may be omitted according to embodiments, and may receive a connector (e.g., a USB connector) for transmitting or receiving power and/or data to or from an external electronic device. Although not shown, the electronic device 100 may include a plurality of connector holes 143, and a part of the plurality of connector holes 143 may function as a connector hole for transmitting or receiving an audio signal to or from an external electronic device. In the illustrated embodiment, the connector hole 143 is disposed on the third sidewall 123c, but it is noted that the disclosure is not limited thereto. For example, the connector hole 143 or an additional connector hole not shown may be disposed on the first sidewall 123a or the second sidewall 123b.

According to various embodiments, the audio modules 145a, 145b, 147a, and 147b may include speaker holes 145a and 145b or microphone holes 147a and 147b. One of the speaker holes 145a and 145b may be provided as a receiver hole for a voice call, and the other may be provided as an external speaker hole. The microphone holes 147a and 147b may include a microphone disposed therein so as to acquire external sound, and in some embodiments, the microphone holes may include multiple microphones disposed therein so as to detect the direction of sound. In some embodiments, the speaker holes 145a and 145b and the microphone holes 147a and 147b may be implemented as a single hole, or a speaker may be included without the speaker holes 145a and 145b (e.g., a piezo speaker). According to an embodiment, the speaker hole indicated by the reference numeral "145b" may be disposed in the first structure 101 and used as a receiver hole for a voice call, and the speaker hole (e.g., an external speaker hole) indicated by the reference numeral "145a", or the microphone holes 147a and 147b may be disposed in the second structure 102 (e.g., one of lateral surfaces 123a, 123b, and 123c).

The camera module 149 may be provided in the second structure 102 and may photograph a subject in a direction opposite to the first area A1 of the display 103. The electronic device 100 may include a plurality of camera modules 149. For example, the electronic device 100 may include an ultra-wide-angle camera, a wide-angle camera, a telephoto camera, or a close-up camera, and include an infrared projector and/or an infrared receiver, according to embodiments, so as to measure a distance to a subject. The camera module 149 may include one or more lenses, an image sensor, and/or an image signal processor.

According to various embodiments, an indicator (not shown) of the electronic device 100 may be disposed in the first structure 101 or the second structure 102, and may include a light-emitting diode so as to provide state information of the electronic device 100 via a visual signal. A sensor module (not shown) of the electronic device 100 may generate an electrical signal or data value corresponding to an external environment state or an internal operating state of the electronic device 100. The sensor module may include, for example, a proximity sensor, a fingerprint sensor, or a biometric sensor (e.g., an iris/face recognition sensor or an HRM sensor). In another embodiment, the electronic device may further include a sensor module, for example, at least one of a gesture sensor, a gyro sensor, an air pressure sensor, a magnetic sensor, an acceleration sensor, a grip sensor, a color sensor, an infrared (IR) sensor, a temperature sensor, a humidity sensor, or an illuminance sensor.

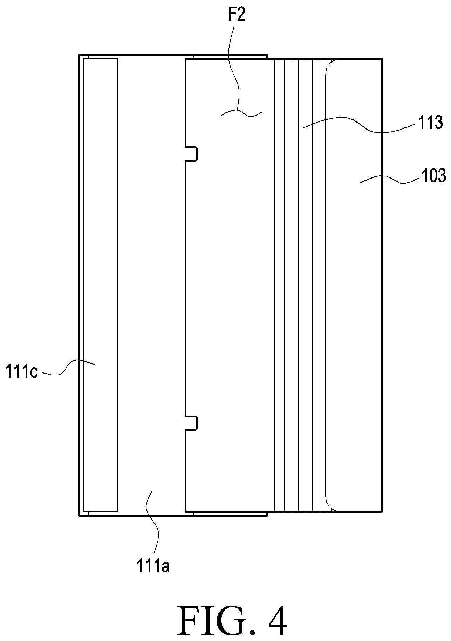

FIG. 3 is an exploded perspective view illustrating an electronic device (e.g., the electronic device 100 of FIG. 1 or 2) according to various embodiments disclosed herein. FIG. 4 is a bottom view illustrating a state in which the flexible display 103 of an electronic device (e.g., the electronic device 100 of FIG. 1 or 3) according to various embodiments disclosed herein is mounted.

Referring to FIGS. 3 and 4, the electronic device 100 may include the first structure 101, the second structure 102 (e.g., a housing), the display 103 (e.g., a flexible display), a guide member (e.g., the roller 151), a multi-joint hinge structure 113, and/or at least one antenna structure 161. A part (e.g., the second area A2) of the display 103 may be received inside the second structure 102 while being guided by the roller 151.

According to various embodiments, the first structure 101 may include the first plate 111a (e.g., a slide plate), and a first bracket 111b and/or a second bracket 111c mounted on the first plate 111a. The first structure 101, for example, the first plate 111a and the first bracket 111b and/or the second bracket 111c may be formed of a metal material and/or a non-metal (e.g., a polymer) material. The first plate 111a may be mounted on the second structure 102 (e.g., a housing) and linearly reciprocate in one direction (e.g., the direction of the arrow ① in FIG. 1) while being guided by the second structure 102. In an embodiment, the first bracket 111b may be coupled to the first plate 111a so as to form the first surface F1 of the first structure 101 together with the first plate 111a. The first area A1 of the display 103 may be substantially mounted on the first surface F1 and maintained in a flat shape. The second bracket 111c may be coupled to the first plate 111a so as to form the second surface F2 of the first structure 101 together with the first plate 111a. According to an embodiment, the first bracket 111b and/or the second bracket 111c may be integrally configured with the first plate 111a. This may be appropriately designed in consideration of a manufacturing process or an assembly structure of a manufactured product. The first structure 101 or the first plate 111a may be coupled to the second structure 102 to rollably or slidingly move with respect to the second structure 102.

According to various embodiments, the multi-joint hinge structure 113 may include a plurality of rods extending in a straight line and disposed parallel to a rotation axis R of the roller 151, and the plurality of rods may be arranged along a direction perpendicular to the rotation axis R, for example, along a direction in which the first structure 101 rollably or slidingly moves. In an embodiment, the multi-joint hinge structure 113 is connected to one end of the first structure 101, so that the multi-joint hinge structure may move with respect to the second structure 102 according to a rolling movement or a sliding movement of the first structure 101. For example, the multi-joint hinge structure 113 may be substantially received inside the second structure 102 in a closed state (e.g., the state shown in FIG. 1), and may be extracted to the outside from the second structure 102 in an open state (e.g., the state shown in FIG. 2). In some embodiments, even in the closed state, a part of the multi-joint hinge structure 113 may not be received inside the second structure 102. For example, even in the closed state, a part of the multi-joint hinge structure 113 may be positioned to correspond to the roller 151 outside the second structure 102.

According to various embodiments, the rods of the multi-joint hinge structure 113 may rotate around another adjacent rod while maintaining a parallel state with the another adjacent rod. Accordingly, according to the rolling movement or the sliding movement of the first structure 101, the multi-joint hinge structure 113 may form a curved surface at a part facing the roller 151, and form a flat surface at a part not facing the roller 151. In an embodiment, the second area A2 of the display 103 may be mounted on or supported by the multi-joint hinge structure 113, and may be exposed to the outside of the second structure 102 together with the first area A1 in the open state (e.g., the state shown in FIG. 2). In a state in which the second area A2 is exposed to the outside of the second structure 102, the multi-joint hinge structure 113 may support or maintain the second area A2 in a flat state by forming a substantially flat surface.

According to various embodiments, the second structure 102 (e.g., a housing) may include the second plate 121a (e.g., a rear case), a printed circuit board (not shown), the rear plate 121b, a third plate 121c (e.g., a front case), and a support member 121d. The second plate 121a, for example, the rear case may be disposed to face an opposite direction to the first surface F1 of the first plate 111a, and may substantially provide an external appearance shape of the electronic device 100 or the second structure 102. In an embodiment, the second structure 102 may include the first sidewall 123a extending from the second plate 121a, the second sidewall 123b extending from the second plate 121a and substantially perpendicular to the first sidewall 123a, and the third sidewall 123c extending from the second plate 121a, substantially perpendicular to the first sidewall 123a, and parallel to the second sidewall 123b. The illustrated embodiment exemplifies a structure in which the second sidewall 123b and the third sidewall 123c are manufactured as separate components from the second plate 121a and mounted or assembled to the second plate 121a, but the second sidewall and the third sidewall may be integrally configured with the second plate 121a.

According to various embodiments, the rear plate 121b may be coupled to an outer surface of the second plate 121a and may be integrally manufactured with the second plate 121a according to embodiments. In an embodiment, the second plate 121a may be made of a metal or polymer material, the rear plate 121b may be made of a material such as metal, glass, synthetic resin, or ceramic to provide a decorative effect on the external appearance of the electronic device 100. According to an embodiment, the second plate 121a and/or the rear plate 121b may be made of a material which at least partially (e.g., an auxiliary display area A3) transmits light. In an embodiment, in a state in which a part (e.g., the second area A2) of the display 103 is received inside the second structure 102, at least a part of the second area A2 may be positioned to correspond to the auxiliary display area A3. For example, in a state of being received inside the second structure 102, the display 103 may output a screen by using at least a part of the second area A2, a user may recognize the output screen through the auxiliary display area A3.

According to various embodiments, the third plate 121c may be made of a metal or polymer material, and may be coupled with the second plate 121a (e.g., a rear case), the first sidewall 123a, the second sidewall 123b, and/or the third sidewall 123c, so as to form an inner space of the second structure 102. According to an embodiment, the third plate 121c may be referred to as a "front case", and the first structure 101, for example, the first plate 111a may rollably or slidingly move in a state of substantially facing the third plate 121c. In some embodiments, the first sidewall 123a may be configured by a combination of a first sidewall portion 123a-1 extending from the second plate 121a and a second sidewall portion 123a-2 formed at one edge of the third plate 121c. In another embodiment, the first sidewall portion 123a-1 may be coupled to surround one edge of the third plate 121c, for example, the second sidewall portion 123a-2, and in this case, the first sidewall portion 123a-1 itself may form the first sidewall 123a.

According to various embodiments, the support member 121d may be disposed in a space between the second plate 121a and the third plate 121c, and may have a flat plate shape made of a metal or polymer material. The support member 121d may provide an electromagnetic shielding structure in the inner space of the second structure 102, or improve mechanical rigidity of the second structure 102. In an embodiment, in the case of being received inside the second structure 102, a partial area (e.g., the second area A2) of the multi-joint hinge structure 113 and/or the display 103 may be located in a space between the second plate 121a and the support member 121d.

According to various embodiments, a printed circuit board, which is not shown, may be disposed in a space between the third plate 121c and the support member 121d. For example, the printed circuit board may be received in a space separated by the support member 121d from a space in which a partial area of the multi-joint hinge structure 113 and/or the display 103 is received inside the second structure 102. The printed circuit board may be equipped with a processor, a memory, and/or an interface. The processor may include, for example, one or more of a central processing unit, an application processor, a graphic processing unit, an image signal processor, a sensor hub processor, or a communication processor.

The memory may include, for example, a volatile memory or a nonvolatile memory.

The interface may include, for example, a high definition multimedia interface (HDMI), a universal serial bus (USB) interface, an SD card interface, and/or an audio interface. For example, the interface may electrically or physically connect the electronic device 100 to an external electronic device, and include a USB connector, an SD card/MMC connector, or an audio connector.

According to various embodiments, the display 103 is a flexible display based on an organic light-emitting diode, and may be at least partially deformed into a curved shape while maintaining generally a flat shape. In an embodiment, the first area A1 of the display 103 may be mounted on or attached to the first surface F1 of the first structure 101, and maintained in a substantially flat shape. The second area A2 may extend from the first area A1 and may be supported by or attached to the multi-joint hinge structure 113. For example, the second area A2 may extend along a rolling movement or sliding movement direction of the first structure 101, and may be received inside the second structure 102 together with the multi-joint hinge structure 113, and at least partially deformed to form a curved shape according to the deformation of the multi-joint hinge structure 113.

According to various embodiments, as the first structure 101 rollably or slidingly moves on the second structure 102, the area of the display 103 exposed to the outside may be changed. The electronic device 100 (e.g., a processor) may change an area of the display 103 which is activated based on the area of the display 103 exposed to the outside. For example, in the open state or at a middle position between the closed state and the open state, the electronic device 100 may activate an area exposed to the outside of the second structure 102 among the entire area of the display 103. In the closed state, the electronic device 100 may activate the first area A1 of the display 103 and deactivate the second area A2. In the closed state, when there is no user input for a predetermined period of time (e.g., 30 seconds or 2 minutes), the electronic device 100 may deactivate the entire area of the display 103. In some embodiments, in a state where the entire area of the display 103 is deactivated, as needed (e.g., notification according to user settings, and notification of missed call/message arrival), the electronic device 100 may activate a partial area of the display 103 to provide visual information through the auxiliary display area A3.

According to various embodiments, in the open state (e.g., the state shown in FIG. 2 ), the entire area (e.g., the first area A1 and the second area A2) of the display 103 may be substantially exposed to the outside, and the first area A1 and the second area A2 may be arranged to form a plane. In an embodiment, even in the open state, a part (e.g., one end) of the second area A2 may be positioned to correspond to the roller 151, and a part of the second area A2 corresponding to the roller 151 may be maintained in a curved shape. For example, in various embodiments disclosed herein, even when it is mentioned that "in the open state, the second area A2 is disposed to form a plane", a part of the second area A2 may be maintained in a curved shape. Similarly, even when it is mentioned that "in the closed state, the multi-joint hinge structure 113 and/or the second area A2 are received inside the second structure 102", a part of the multi-joint hinge structure 113 and/or the second area A2 may be positioned outside the second structure 102.

According to various embodiments, the guide member, for example, the roller 151 may be rotatably mounted on the second structure 102 at a position adjacent to one edge of the second structure 102 (e.g., the second plate 121a). For example, the roller 151 may be disposed adjacent to an edge (e.g., a part indicated by reference numeral "IE") of the second plate 121a parallel to the first sidewall 123a. Although not given a reference numeral in the drawings, another sidewall may extend from the edge of the second plate 121a adjacent to the roller 151, and a sidewall adjacent to the roller 151 may be substantially parallel to the first sidewall 123a. In an embodiment, a sidewall of the second structure 102 adjacent to the roller 151 may be made of a light-transmitting material, and a part of the second area A2 may provide visual information through a part of the second structure 102 in a state of being received in the second structure 102.

According to various embodiments, one end of the roller 151 may be rotatably coupled to the second sidewall 123b and the other end may be rotatably coupled to the third sidewall 123c. For example, the roller 151 may be mounted on the second structure 102, and rotate about a rotation axis R perpendicular to a rolling movement or sliding movement direction (e.g., the direction of the arrow ① in FIG. 1 or 2) of the first structure 101. The rotation axis R may be substantially parallel to the first sidewall 123a and may be located far from the first sidewall 123a, for example, at one edge of the second plate 121a. In an embodiment, a gap formed between the outer circumferential surface of the roller 151 and the inner surface of the edge of the second plate 121a may form an entrance through which the multi-joint hinge structure 113 or the display 103 enters the inside of the second structure 102.

According to various embodiments, when the display 103 is deformed into a curved shape, the roller 151 maintains a radius of curvature of the display 103 at a predetermined level, thereby suppressing excessive deformation of the display 103. The "excessive deformation" may refer to deformation to have an excessively small radius of curvature to the extent that a pixel or a signal wire included in the display 103 is damaged. For example, the display 103 may be moved or deformed while being guided by the roller 151, and may be protected from damage due to excessive deformation. In some embodiments, the roller 151 may rotate while the multi-joint hinge structure 113 or the display 103 is inserted into or extracted to the outside from the second structure 102. For example, by suppressing or preventing friction between the multi-joint hinge structure 113 (or the display 103) and the second structure 102, the multi-joint hinge structure 113 (or the display 103) may smoothly perform an insertion/extraction operation of the second structure 102.

According to various embodiments, the electronic device 100 may further include guide rail(s) 155 and/or actuating member(s) 157. The guide rail(s) 155 may be mounted on the second structure 102, for example, the third plate 121c to guide a rolling movement or a sliding movement of the first structure 101 (e.g., the first plate 111a or the slide plate). The actuating member(s) 157 may include a spring or a spring module which provides an elastic force in a direction that causes both ends thereof to move away from each other, and one end of the actuating member(s) 157 may be rotatably supported on the second structure 102 and the other end thereof may be rotatably supported on the first structure 101.

According to various embodiments, when the first structure 101 rolls or slides, both ends of the actuating member(s) 157 may be positioned closest to each other at a point between the closed state and the open state (hereinafter referred to as a "closest point"). For example, in a section between the closest point and the closed state, the actuating member(s) 157 may provide an elastic force to the first structure 101 in a direction of moving toward the closed state, and in a section between the closest point and the open state, the actuating member(s) 157 may provide an elastic force to the first structure 101 in a direction of moving toward the open state.

According to various embodiments, the antenna structure 161 may be disposed on at least one of the first structure 101 or the second structure 102. The antenna structure 161 may include a loop antenna configured by an array of electrically conductive bodies, for example, electrically conductive lines, on a plane or a flat plate. In some embodiments, according to the arrangement or shape of an electrically conductive body, the antenna structure 161 may include a patch antenna, a monopole antenna, a dipole antenna, or an inverted F-antenna. The antenna structure may be configured to perform, for example, at least one communication among proximity wireless communication, wireless power transmission and reception, and magnetic security transmission. However, it should be noted that wireless communication through the antenna structure 161 is not limited thereto. For example, the electronic device 100 may access a mobile or cellular communication network, a local area network (LAN), a wireless local area network (WLAN), a wide area network (WAN), the Internet, or a small area network (SAN) by using the antenna structure 161. According to an embodiment, the antenna structure 161 may include a first antenna 161a for magnetic secure transmission (MST) and/or near field communication, and a second antenna 161b for near field communication and/or wireless charging (wireless power transmission). In some embodiments, the first antenna 161a may be configured to perform near field communication and/or wireless charging, and the second antenna 161b may be used for magnetic secure transmission.

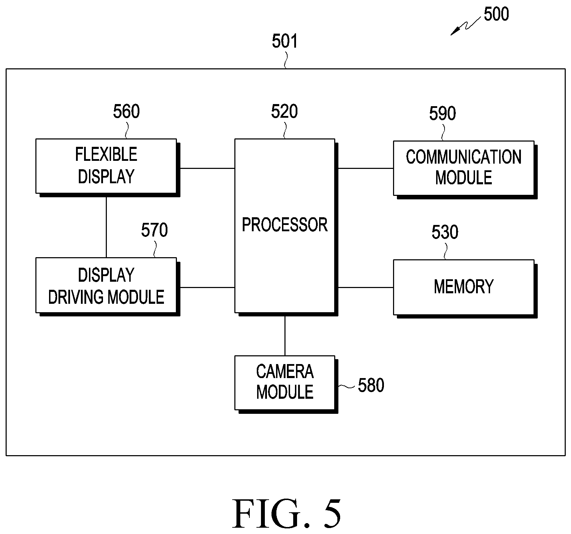

FIG. 5 is a block diagram of an electronic device according to the invention.

Referring to FIG. 5, an electronic device 501 (e.g., the electronic device 100 of FIGS. 1 to 3) includes a processor 520, a memory 530, a flexible display 560 including a first area A1 and a second area A2 which may be exposed to or inserted into a housing (e.g., the second structure 102 of FIGS. 1 to 3) of the electronic device, a display driving module 570, a camera module 580, and a communication module 590.

According to the invention, in a first state (e.g., the closed state of FIG. 1) in which the first area A1 of the flexible display 560 is exposed and the second area A2 is inserted into the housing (e.g., the second structure 102 of FIGS. 1 to 3), when a second camera interface (e.g., a selfie photographing preview mode) is selected, the processor 520 turns on the second area A2 having been inserted in the housing, so as to display an image received from the camera module 580 (e.g., the camera module 149 of FIGS. 1 and 2).

At least a part (e.g., A3 of FIGS. 1 to 3) of the housing (e.g., the second structure 102 of FIGS. 1 to 3) facing the second area A2 when the second area A2 is inserted into the housing is formed of a transparent material.

According to an embodiment, at least a part (e.g., A3 of FIGS. 1 to 3) of the housing (e.g., the second structure 102 of FIGS. 1 to 3) facing the second area A2 when the second area A2 is inserted into the housing may be configured as an opening.

When a camera application is executed in the first state, the processor 520 displays, in the first area A1 of the display 560, an image received through the camera module 580 (e.g., a rear camera module) in a first camera interface. The processor 520 may display, in the first area A1 of the display 560, an image received through a default camera lens (e.g., a camera lens with a wide field of view) among a plurality of camera lenses (e.g., a camera lens with an ultra-wide field of view, a camera lens with a wide field of view, and a telephoto camera lens) included in the camera module. The processor 520 turns off the second area A2 of the display 560 in a state where the first camera interface is activated.

According to the invention, in the first state, when the second camera interface is selected while displaying the first camera interface, the processor 520 turns on the second area A2 of the display 560 which was turned off, and switches to the second camera interface.
The processor 520 displays, in the second area A2 of the display 560, an image received through the camera module 580 (e.g., a rear camera module) in the second camera interface. The processor 520 may display, in the second area A2 of the display 560, an image received through a default camera lens (e.g., a camera lens with a wide field of view) among a plurality of camera lenses (e.g., a camera lens with an ultra-wide field of view, a camera lens with a wide field of view, and a telephoto camera lens) included in the camera module 580. In the housing into which the second area A2 of the display 560 is inserted, at least a part (e.g., A3 of FIGS. 1 to 3) facing the second area A2 is formed of a transparent material or configured as an opening, so that the image displayed in the second area A2 may be visually provided to a user.

According to an embodiment, the processor 520 may display an indicator (e.g., an icon) capable of simultaneously selecting the plurality of camera lenses (e.g., a camera lens with an ultra-wide field of view, a camera lens with a wide field of view, and a telephoto camera lens) included in the camera module 580 in the second camera interface in the first state, divide the second area A2 into a plurality of preview areas when selection of the indicator is detected, and display images received through the plurality of camera lenses in the plurality of preview areas, respectively.

While displaying the images received through the plurality of camera lenses in the plurality of preview areas, respectively, or before displaying the images received through the plurality of camera lenses in the plurality of preview areas, respectively, the processor 520 may identify an activated preview area and a deactivated preview area by a user's selection from among the plurality of preview areas.

The processor 520 may display, in the activated preview area, an image received from a camera lens corresponding to the activated preview area at a basic frame rate (e.g., 30 fps) configured for displaying a preview image.

The processor 520 may receive and display, in the deactivated preview area, images received from a camera lens corresponding to the deactivated preview area at a frame rate (e.g., 1 fps) lower than the basic frame rate (e.g., 30 fps), or display a still shot image or a thumbnail image of one of the images received from the camera lens corresponding to the deactivated preview area.

The processor 520 may receive and display an image at a basic frame rate (e.g., 30 fps) configured for displaying a preview image only in a preview area activated by a user's selection, and receive and display an image at a slow frame in at least one deactivated preview area not selected by the user, or display a still shot image or a thumbnail image, so as to reduce system load such as increased power consumption or increased heat generation when driving the plurality of camera lenses simultaneously.

The processor 520 may display a first indicator indicating an activated state or a deactivated state in each of the plurality of preview areas, and display the first indicator discriminatively according to the activated state or the deactivated state. The processor 520 may switch a corresponding preview area into an activated state or a deactivated state, based on the selection of the first indicator.

The processor 520 may display a photographing button in each of the plurality of preview areas, and capture an image displayed in a preview area selected by the photographing button among the plurality of preview areas.

According to an embodiment, the processor 520 may display a plurality of indicators (e.g., a plurality of icons) capable of selecting the plurality of camera lenses (e.g., a camera lens with an ultra-wide field of view, a camera lens with a wide field of view, and a telephoto camera lens) included in the camera module 580, respectively, in the second camera interface in the first state, and when an indicator is selected from among the plurality of indicators, display, in the second area A2, an image received from a camera lens (e.g., a telephoto camera lens) corresponding to the selected indicator.

According to an embodiment, the processor 520 may display a plurality of indicators (e.g., a plurality of icons) capable of selecting the plurality of camera lenses (e.g., a camera lens with an ultra-wide field of view, a camera lens with a wide field of view, and a telephoto camera lens) included in the camera module 580, respectively, in the second camera interface in the first state, divide the second area A2 into at least two preview areas when at least two indicators are selected from among the plurality of indicators, and display images received from at least two camera lenses (e.g., a camera lens with an ultra-wide field of view and a camera lens with a wide field of view) corresponding to the at least two preview areas, respectively.

According to an embodiment, the processor 520 may display a plurality of indicators (e.g., a plurality of icons) capable of selecting a plurality of photographing modes included in the camera module 580, respectively, in the second camera interface in the first state, and when an indicator is selected from among the plurality of indicators, display, in the second area A2, an image corresponding to a photographing mode (e.g., a live focus mode) corresponding to the selected indicator.

According to various embodiments, in a first state (e.g., the closed state of FIG. 1) in which the first area A1 of the flexible display 560 is exposed and the second area A2 is inserted into the housing (e.g., the second structure 102 of FIGS. 1 to 3), the memory 530 may store an image displayed in the first area A1 of the display 560 according to an input of a photographing button in the first camera interface (e.g., a general photographing preview mode). In the first state, the memory 530 may store an image displayed in the second area A2 of the display 560 according to an input of a photographing button in the second camera interface (e.g., a selfie photographing preview mode).

According to various embodiments, as shown in FIGS. 1 to 3, the display 560 (e.g., the display 103 of FIGS. 1 to 4) may include the first area A1 and the second area A2 extending from the first area A1. The second area A2 of the display 560 may be turned off in the first camera interface (e.g., a general photographing preview mode) and turned on in the second camera interface (e.g., a selfie photographing preview mode).

According to various embodiments, the display driving module 570 may include a driving body or a motor capable of exposing the second area A2 of the display 560 to the outside of the housing (e.g., the second structure 102 of FIGS. 1 to 3) of the electronic device or inserting the second area into the housing.

According to various embodiments, the camera module 580 (e.g., the camera module 149 of FIGS. 1 and 2) may represent a rear camera module 580 and include the plurality of camera lenses (e.g., a camera lens with an ultra-wide field of view, a camera lens with a wide field of view, and a telephoto camera lens).

According to various embodiments, the communication module 590 may include a plurality of communication circuits, include at least one of a wireless LAN module (not shown) and a short-range communication module (not shown), and include a UWB communication module, a Wi-Fi communication module, an NFC communication module, a Bluetooth legacy communication module, and/or a BLE communication module as the short-range communication module (not shown).

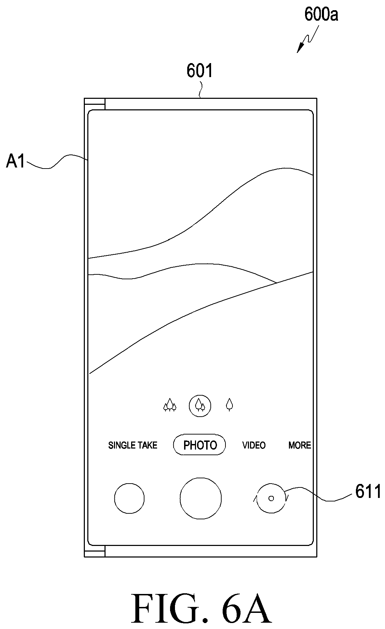

FIGS. 6A to 6E are diagrams 600a to 600e illustrating an operation of capturing an image in an electronic device according to various embodiments.

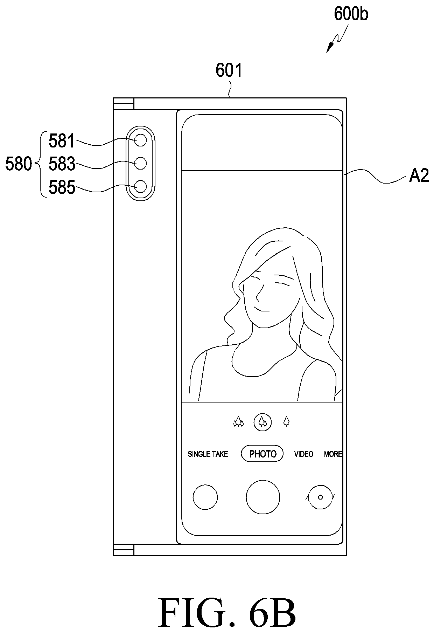

As shown in FIG. 6A, when a camera application is executed in a first state (e.g., the closed state of FIG. 1) in which a first area A1 of a flexible display is exposed and a second area A2 is inserted into a housing (e.g., the second structure 102 of FIGS. 1 to 3), an electronic device 601 (e.g., the electronic device 100 of FIGS. 1 to 3 and/or the electronic device 501 of FIG. 5) activates a first camera interface (e.g., a general photographing preview mode), and display, in the first area A1, an image received from the rear camera module 580 in the first camera interface. The electronic device 601 may display, in the first area A1 of the display, an image received through a default camera lens (e.g., a camera lens with a wide field of view) among a plurality of camera lenses (e.g., a camera lens with an ultra-wide field of view, a camera lens with a wide field of view, and a telephoto camera lens) included in the camera module 580. The electronic device 601 turns off the second area A2 of the display having been inserted into the housing in a state where the first camera interface is activated. When selection of a second camera interface switching indicator 611 capable of switching to a second camera interface among indicators displayed on the first camera interface is identified, the electronic device 601 switches to the second camera interface (e.g., a selfie photographing preview mode) as shown in FIG. 6B.

As shown in FIG. 6B, in the first state, the electronic device 601 (e.g., the electronic device 100 of FIGS. 1 to 3 and/or the electronic device 501 of FIG. 5) turns on the second area A2 of the display having been inserted into the housing, and switch to the second camera interface (e.g., a selfie photographing preview mode).

The electronic device 601 may display, in the second area A2, an image received from a second camera lens 583 (e.g., a camera lens with a wide field of view) configured by default among a plurality of camera lenses 581, 583, and 585 (e.g., a camera lens with an ultra-wide field of view, a camera lens with a wide field of view, and a telephoto camera lens) included in the rear camera module 580, in the second camera interface.

The electronic device 601 may display, in the second camera interface, a plurality of indicators capable of selecting a plurality of camera lenses, respectively, a plurality of indicators capable of selecting a plurality of photographing modes, respectively, and an indicator capable of simultaneously selecting a plurality of camera lenses.

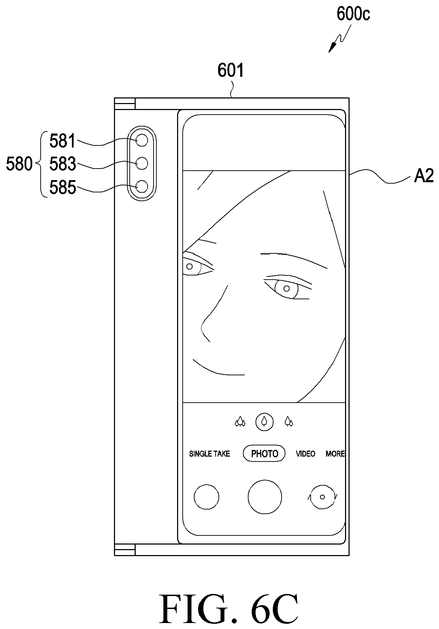

As shown in FIG. 6C, when selection of an indicator indicating a third camera lens 585 (e.g., a telephoto camera lens) among the plurality of indicators capable of selecting the plurality of camera lenses, respectively, is identified in the second camera interface, the electronic device 601 (e.g., the electronic device 100 of FIGS. 1 to 3 and/or the electronic device 501 of FIG. 5) may display an image received from the third camera lens 585 in the second area A2.

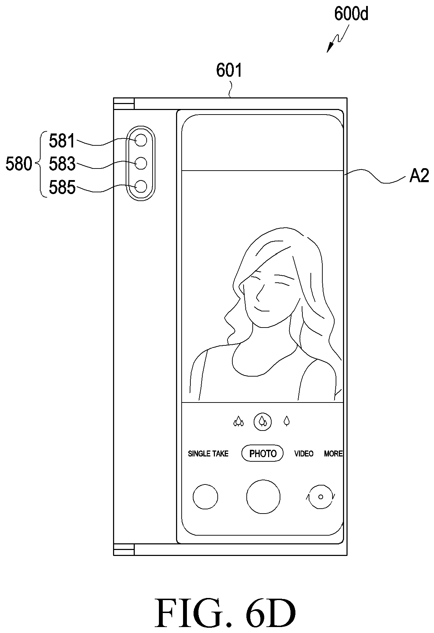

As shown in FIG. 6D, when selection of an indicator indicating a first photographing mode (e.g., a live focus mode) among the plurality of indicators capable of selecting the plurality of photographing modes, respectively, is identified in the second camera interface, the electronic device 601 (e.g., the electronic device 100 of FIGS. 1 to 3 and/or the electronic device 501 of FIG. 5) may display an image corresponding to the first photographing mode in the second area A2.

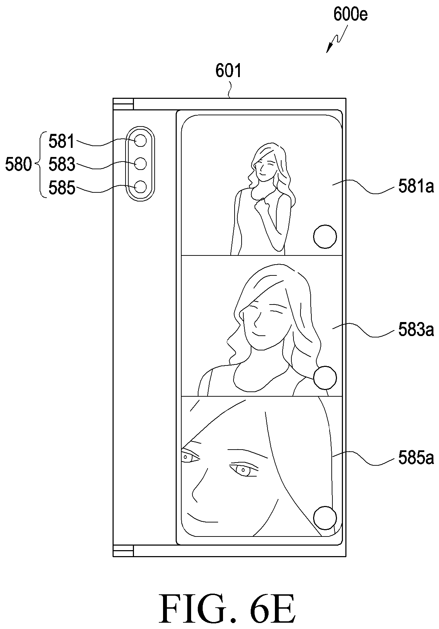

As shown in FIG. 6E, when selection of the indicator capable of simultaneously selecting the plurality of camera lenses by a user is identified in the second camera interface, the electronic device 601 (e.g., the electronic device 100 of FIGS. 1 to 3 and/or the electronic device 501 of FIG. 5) may divide the second area A2 into a plurality of preview areas 581a, 583a, and 585a. The electronic device 601 may display an image received from a first camera lens 581 (e.g., a camera lens with an ultra-wide field of view) in a first preview area 581a among the plurality of preview areas 581a, 583a, and 585a, display an image received from the second camera lens 583 (e.g., a camera lens with a wide field of view) in a second preview area 583a, and display an image received from the third camera lens 585 (e.g., a telephoto camera lens) in a third preview area 585a.

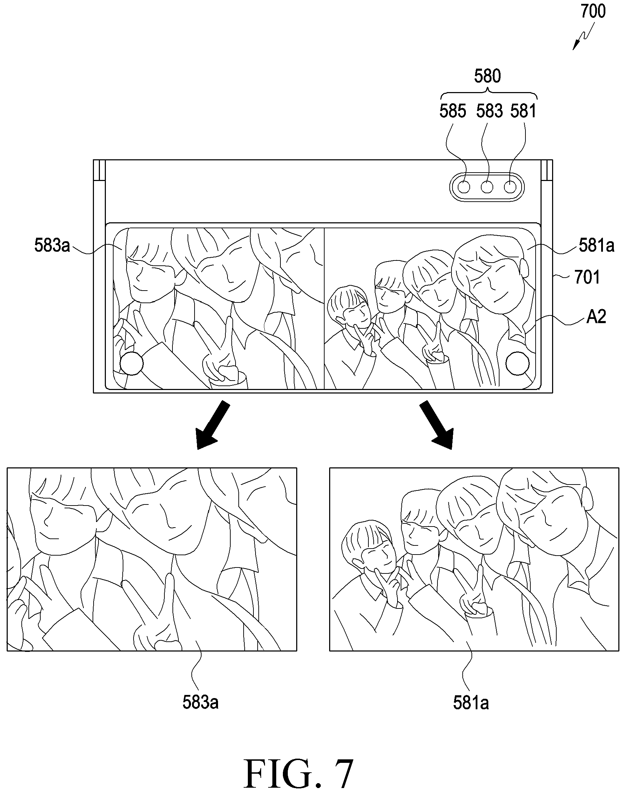

FIG. 7 is a diagram 700 illustrating an operation of capturing an image in an electronic device according to various embodiments.

As shown in FIG 7, in a first state (e.g., the closed state of FIG. 1) in which a first area A1 of a flexible display is exposed and a second area A2 is inserted into a housing (e.g., the second structure 102 of FIGS. 1 to 3), an electronic device 701 (e.g., the electronic device 100 of FIGS. 1 to 3 and/or the electronic device 501 of FIG. 5) may switch to a second camera interface (e.g., a selfie photographing preview mode) in which the second area A2 of the display having been inserted into the housing is turned on, and display a plurality of indicators capable of selecting a plurality of camera lenses, respectively, in the second camera interface.

The electronic device 701 may divide the second area A2 into the plurality of preview areas 581a and 583a when selection of an indicator indicating the first camera lens 581 and an indicator indicating the second camera lens 583 among the plurality of camera lenses is identified. The electronic device 701 may display an image received from the first camera lens 581 (e.g., a camera lens with an ultra-wide field of view) in the first preview area 581a among the plurality of preview areas 581a and 583a, and display an image received from the second camera lens 583 (e.g., a camera lens with a wide field of view) in the second preview area 583a. As the electronic device 701 enables selfie photographing by using the rear camera module 580 including a plurality of camera lenses in the second camera interface (e.g., a selfie photographing preview mode), the electronic device may photograph selfies of many people including a user of the electronic device 701 at the same time with a wide camera angle of view.

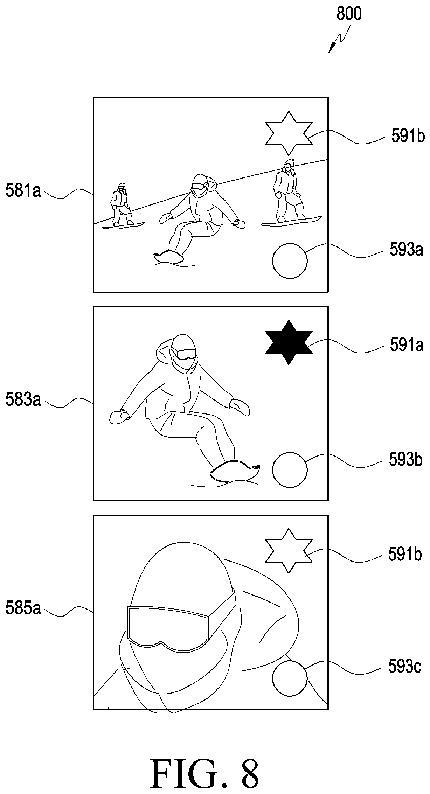

FIG. 8 is a diagram 800 illustrating an operation of controlling a plurality of preview images in an electronic device according to various embodiments.

As shown in FIG 8, in a first state (e.g., the closed state of FIG. 1) in which a first area A1 of a flexible display is exposed and a second area A2 is inserted into a housing (e.g., the second structure 102 of FIGS. 1 to 3), an electronic device (e.g., the electronic device 100 of FIGS. 1 to 3 and/or the electronic device 501 of FIG. 5) may switch to a second camera interface (e.g., a selfie photographing preview mode) in which the second area A2 of the display having been inserted into the housing is turned on.

When selection of an indicator capable of simultaneously selecting a plurality of camera lenses by a user is identified in the second camera interface, divide the second area A2 into the plurality of preview areas 581a, 583a, and 585a. When only the second preview area 583a among the plurality of preview areas 581a, 583a, and 585a is identified as a preview area activated by the user, the electronic device may display an image received from the second camera lens 583 (e.g., a camera lens with a wide field of view) in the second preview area 583a at a basic frame rate (e.g., 30 fps) configured for displaying a preview image, display a first indicator 591a indicating an activated state or a deactivated state, as an activated state, in the second preview area 583a, and display a photographing button 593b capable of capturing an image displayed in the second preview area 583a.

The electronic device may receive and display, in the first preview area 581a, an image received from the first camera lens 581 (e.g., a camera lens with an ultra-wide field of view) at a frame rate (e.g., 1 fps) lower than the basic frame rate (e.g., 30 fps), or display a still shot image or a thumbnail image of one of images received from a camera lens corresponding to the deactivated preview area. The electronic device may display a first indicator 591b indicating an activated state or a deactivated state, as a deactivated state, in the first preview area 581a, and display the photographing button 593b capable of capturing an image displayed in the first preview area 581a.

The electronic device may receive and display, in the third preview area 585a, an image received from the third camera lens 585 (e.g., a telephoto camera lens) at a frame rate (e.g., 1 fps) lower than the basic frame rate (e.g., 30 fps), or display a still shot image or a thumbnail image of one of images received from a camera lens corresponding to the deactivated preview area. The electronic device may display the first indicator 591b indicating an activated state or a deactivated state, as a deactivated state, in the third preview area 585a, and display a photographing button 593c capable of capturing an image displayed in the third preview area 585a.

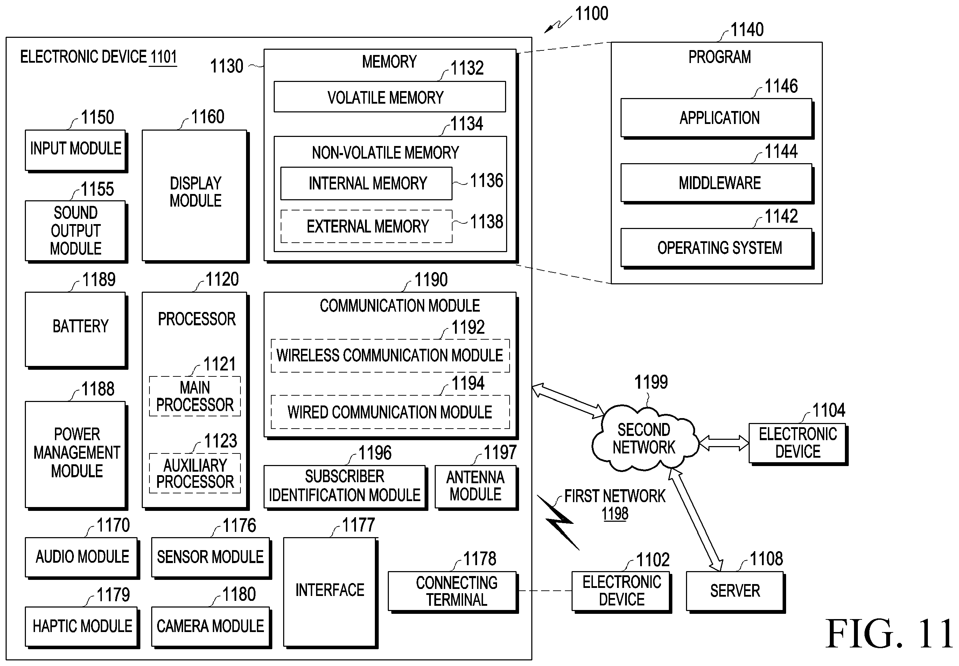

According to the invention, an electronic device (e.g., the electronic device 100 of FIGS. 1 to 3 and 4 or the electronic device 1100 of FIG. 11) includes a camera module (e.g., the camera module 149 of FIGS. 1 and 2 or the camera module 580 of FIG. 5), a housing (e.g., the second structure 102 of FIGS. 1 to 3) which is at least partially formed of a transparent material, a flexible display (e.g., the display 103 of FIGS. 1 to 4 or the display 560 of FIG. 5) configured to include a first area A1 and a second area A2 extending from the first area A1, wherein the second area A2 is inserted into the housing or exposed to the outside of the housing, and a processor (e.g., the processor 520 of FIG. 5 or the processor 1120 of FIG. 11), wherein the processor is configured to display, in the first area, an image received through the camera module in a first camera interface when a camera application is executed in a first state in which the first area is exposed and the second area is inserted into the housing, and when switching to a second camera interface is selected, turn on the second area and switch to the second camera interface so as to display, in the second area, the image received through the camera module.

According to the invention, the housing is configured such that at least a part of the housing facing the second area when the second area is inserted into the housing is formed of a transparent material.

According to various embodiments, the housing may be configured such that at least a part of the housing facing the second area when the second area is inserted into the housing is configured as an opening.

According to various embodiments, the camera module may include a rear camera module including a plurality of lenses.

The processor is configured to turn off the second area while displaying, in the first area, the image received through the camera module in the first camera interface in the first state.

According to various embodiments, the processor may be configured to, when selection of an indicator capable of simultaneously selecting a plurality of camera lenses included in the camera module is detected in the second camera interface, divide the second area into a plurality of preview areas to correspond to the plurality of camera lenses, and display images received through the plurality of camera lenses in the plurality of preview areas, respectively.

According to various embodiments, the processor may be configured to receive and display, in an activated preview area among the plurality of preview areas, an image received from a camera lens corresponding to the activated preview area at a basic frame rate configured for displaying a preview image, and receive and display, in a deactivated preview area, images received from a camera lens corresponding to the deactivated preview area at a frame rate lower than the basic frame rate, or display a still shot image or a thumbnail image of one of the images received from the camera lens corresponding to the deactivated preview area.

According to various embodiments, the processor may be configured to capture an image of a preview area in which a photographing button is detected among the plurality of preview areas.

According to various embodiments, the processor may be configured to display a plurality of indicators capable of selecting a plurality of camera lenses included in the camera module, respectively, in the second camera interface, and display, in the second area, an image received from a camera lens corresponding to an indicator selected from among the plurality of indicators.

According to various embodiments, the processor may be configured to display a plurality of indicators capable of selecting a plurality of photographing modes, respectively, in the second camera interface, and display, in the second area, an image corresponding to a photographing mode corresponding to an indicator selected from among the plurality of indicators.

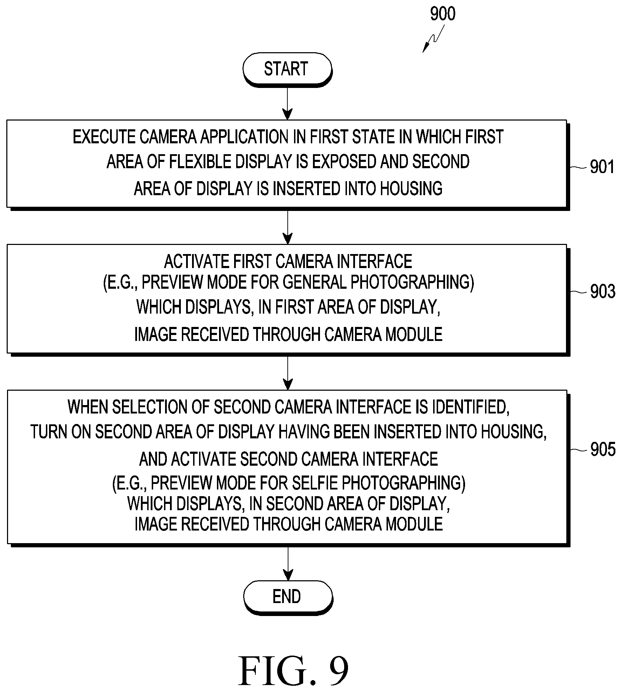

FIG. 9 is a flowchart 900 illustrating an operation of capturing an image in an electronic device according to various embodiments. The operation of capturing an image may include operations 901 to 905. According to an embodiment, at least one of operations 901 to 905 may be omitted, the order of some operations may be changed, or another operation may be added.

In operation 901, in a first state (e.g., the closed state of FIG. 1) in which a first area A1 of a flexible display (e.g., the flexible display 560 of FIG. 5) is exposed and a second area A2 is inserted into a housing (e.g., the second structure 102 of FIGS. 1 to 3), an electronic device (e.g., the electronic device 100 of FIGS. 1 to 3 and/or the electronic device 501 of FIG. 5) executes
a camera application.

According to an embodiment, in the first state, the electronic device turns on the first area A1 of the display and turns off the second area A2 so as to activate the first area.

In operation 903, the electronic device (e.g., the electronic device 100 of FIGS. 1 to 3 and/or the electronic device 501 of FIG. 5) activates a first camera interface (e.g., a preview mode for general photographing) which displays an image received through a camera module (e.g., the rear camera module 580 of FIG. 5) in the first area A1 of the display (e.g., the flexible display 560 of FIG. 5).

According to an embodiment, the electronic device may display, in the first area A1 of the display, an image received through a default camera lens (e.g., a camera lens with a wide field of view) among a plurality of camera lenses (e.g., a camera lens with an ultra-wide field of view, a camera lens with a wide field of view, and a telephoto camera lens) included in the camera module.

In operation 905, the electronic device (e.g., the electronic device 100 of FIGS. 1 to 3 and/or the electronic device 501 of FIG. 5) turns on the second area A2 of the display (e.g., the flexible display 560 of FIG. 5) having been inserted by the housing when selection of a second camera interface is identified, and display an image received through a camera module (e.g., the rear camera module 580 of FIG. 5) in the second area A2 of the display.

According to an embodiment, the electronic device may display, in the second area A2 of the display, an image received through a default camera lens (e.g., a camera lens with a wide field of view) among a plurality of camera lenses (e.g., a camera lens with an ultra-wide field of view, a camera lens with a wide field of view, and a telephoto camera lens) included in the camera module. In the housing into which the second area A2 of the display is inserted, at least a part (e.g., A3 of FIGS. 1 to 3) facing the second area A2 is formed of a transparent material or configured as an opening, so that an image displayed in the second area A2 may be visually provided to a user.

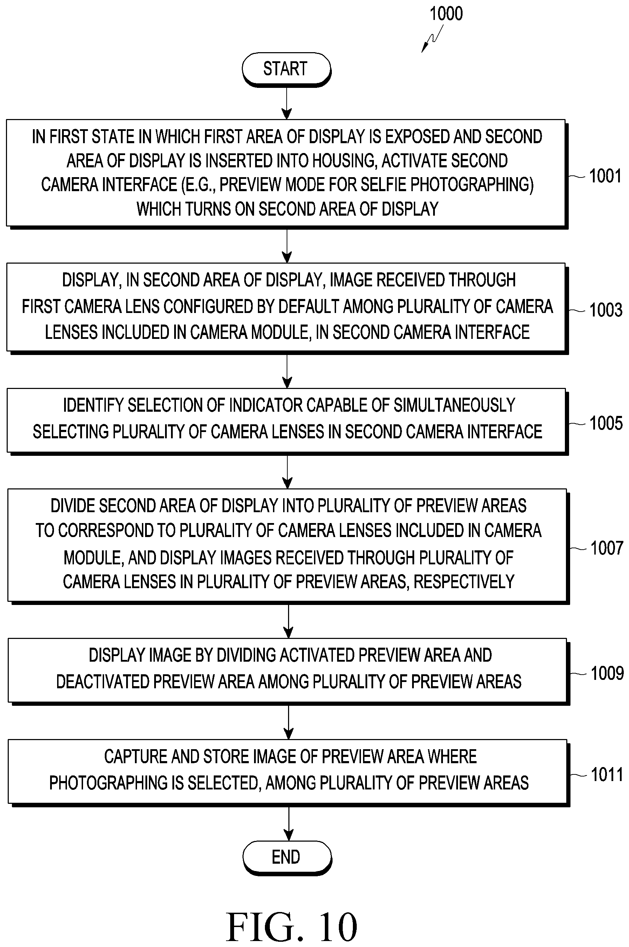

FIG. 10 is a flowchart 1000 illustrating an operation of controlling a plurality of preview images in an electronic device according to various embodiments. The operation of capturing a plurality of preview images may include operations 1001 to 1011. According to an embodiment, at least one of operations 1001 to 1013 may be omitted, the order of some operations may be changed, or another operation may be added.

In operation 1001, in a first state (e.g., the closed state of FIG. 1) in which a first area A1 of a flexible display (e.g., the flexible display 560 of FIG. 5) is exposed and a second area A2 is inserted into a housing (e.g., the second structure 102 of FIGS. 1 to 3), an electronic device (e.g., the electronic device 100 of FIGS. 1 to 3 and/or the electronic device 501 of FIG. 5) may activate a second camera interface (e.g., a preview mode for selfie photographing) which turns on the second area A2 of the display.

In operation 1003, the electronic device (e.g., the electronic device 100 of FIGS. 1 to 3 and/or the electronic device 501 of FIG. 5) may display, in the second area of the display, an image received through a first camera lens configured by default among a plurality of camera lenses included in a camera module (e.g., the rear camera module 580 of FIG. 5), in the second camera interface.

In operation 1005, the electronic device (e.g., the electronic device 100 of FIGS. 1 to 3 and/or the electronic device 501 of FIG. 5) may identify selection of an indicator capable of simultaneously selecting the plurality of camera lenses, in the second camera interface.

According to an embodiment, the electronic device may display, in the second interface, a plurality of indicators capable of selecting a plurality of camera lenses, respectively, a plurality of indicators capable of selecting a plurality of photographing modes, respectively, and an indicator capable of simultaneously selecting a plurality of camera lenses.

In operation 1007, the electronic device (e.g., the electronic device 100 of FIGS. 1 to 3 and/or the electronic device 501 of FIG. 5) may divide the second area A2 of the display (e.g., the flexible display 560 of FIG. 4) into a plurality of preview areas to correspond to the plurality of camera lenses included in the camera module (e.g., the rear camera module 580 in FIG. 5), and display images received through the plurality of camera lenses in the plurality of preview areas, respectively.

In operation 1009, the electronic device (e.g., the electronic device 100 of FIGS. 1 to 3 and/or the electronic device 501 of FIG. 5) may display an image by dividing an activated preview area and a deactivated preview area among the plurality of preview areas.

According to an embodiment, while displaying the images received through the plurality of camera lenses in the plurality of preview areas, respectively, or before displaying the images received through the plurality of camera lenses in the plurality of preview areas, respectively, the electronic device may identify an activated preview area and a deactivated preview area by a user's selection among the plurality of preview areas.

According to an embodiment, the electronic device may display, in the activated preview area, an image received from a camera lens corresponding to the activated preview area at a basic frame rate (e.g., 30 fps) configured for displaying a preview image.

According to an embodiment, the electronic device may receive and display, in the deactivated preview area, images received from a camera lens corresponding to the deactivated preview area at a frame rate (e.g., 1 fps) lower than the basic frame rate (e.g., 30 fps), or display a still shot image or a thumbnail image of one of the images received from the camera lens corresponding to the deactivated preview area.

According to an embodiment, the electronic device may display a first indicator indicating an activated state or a deactivated state in each of the plurality of preview areas, and display the first indicator discriminatively according to the activated state or the deactivated state. The electronic device may switch a corresponding preview area into an activated state or a deactivated state, based on the selection of the first indicator.

In operation 1011, the electronic device (e.g., the electronic device 100 of FIGS. 1 to 3 and/or the electronic device 501 of FIG. 5) may capture and store an image of a preview area where photographing is selected, among the plurality of preview areas.

According to an embodiment, the electronic device may display a photographing button in each of the plurality of preview areas, and capture an image displayed in a preview area selected by the photographing button among the plurality of preview areas.

The above-described electronic device (e.g., the electronic device 100 of FIGS. 1 to 3 and 4 and the electronic device 501 of FIG. 5) may be implemented identically or similarly to the electronic device 1101 described below.

FIG. 11 is a block diagram illustrating an electronic device 1101 in a network environment 1100 according to various embodiments.

Referring to FIG. 11, the electronic device 1101 in the network environment 1100 may communicate with an electronic device 1102 via a first network 1198 (e.g., a short-range wireless communication network), or an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module (SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to one embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control, for example, at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active (e.g., executing an application) state. According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or an external electronic device (e.g., an electronic device 1102 (e.g., a speaker or a headphone)) directly or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, an HDMI connector, a USB connector, an SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to one embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device 1104 via the first network 1198 (e.g., a short-range communication network, such as BluetoothTM, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify or authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the external electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

According to various embodiments, a method for capturing an image in an electronic device includes, when a camera application is executed in a first state in which a first area of a display is exposed and a second area of the display is inserted into a housing which is at least partially formed of a transparent material, displaying, in the first area, an image received through a camera module in a first camera interface, and when switching to a second camera interface is selected, turning on the second area and switching to the second camera interface so as to display, in the second area, the image received through the camera module.

The housing is configured such that at least a part of the housing facing the second area when the second area is inserted into the housing is formed of a transparent material.

According to various embodiments, the housing may be configured such that at least a part of the housing facing the second area when the second area is inserted into the housing is configured as an opening.

According to various embodiments, the camera module may include a rear camera module including a plurality of lenses.

The method includes turning off the second area while displaying, in the first area, the image received through the camera module in the first camera interface in the first state.

According to various embodiments, the method may further include, when selection of an indicator capable of simultaneously selecting a plurality of camera lenses included in the camera module is detected in the second camera interface, dividing the second area into a plurality of preview areas to correspond to the plurality of camera lenses, and displaying images received through the plurality of camera lenses in the plurality of preview areas, respectively.

According to various embodiments, the method may further include receiving and displaying, in an activated preview area among the plurality of preview areas, an image received from a camera lens corresponding to the activated preview area at a basic frame rate configured for displaying a preview image, and receiving and displaying, in a deactivated preview area, images received from a camera lens corresponding to the deactivated preview area at a frame rate lower than the basic frame rate, or displaying a still shot image or a thumbnail image of one of the images received from the camera lens corresponding to the deactivated preview area.

According to various embodiments, the method may further include capturing an image of a preview area in which a photographing button is detected among the plurality of preview areas.

According to various embodiments, the method may further include displaying a plurality of indicators capable of selecting a plurality of camera lenses included in the camera module, respectively, in the second camera interface, and displaying, in the second area, an image received from a camera lens corresponding to an indicator selected from among the plurality of indicators.

According to various embodiments, the method may further include displaying a plurality of indicators capable of selecting a plurality of photographing modes, respectively, in the second camera interface, and displaying, in the second area, an image corresponding to a photographing mode corresponding to an indicator selected from among the plurality of indicators.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100, 501, 601, 701, 1101) comprising:
a camera module (149, 580, 1180);
a housing (102) which is at least partially formed of a transparent material;
a flexible display (103, 560, 1160);
a processor (120, 520, 1120); and
memory (530, 1130) storing instructions that, when executed by the processor (120, 520, 1120), cause the electronic device (100, 501, 601, 701, 1101) to:
when a camera application is executed in a first state in which a first area (A1) of the flexible display (103, 560, 1160) is exposed and a second area (A2) of the flexible display extending from the first area (A1) is inserted into the housing (102), turn on the first area (A1), turn off the second area (A2) and display, in the first area, an image received through the camera module (149, 580, 1180) in a first camera interface; and
when switching to a second camera interface is selected, turn on the second area (A2) and switch to the second camera interface so as to display, in the second area (A2), the image received through the camera module (149, 580, 1180).

2. The electronic device (100, 501, 601, 701, 1101) of claim 1, wherein the housing (102) is configured such that at least a part of the housing (102) facing the second area (A2) when the second area (A2) is inserted into the housing (102) is formed of a transparent material or configured as an opening.

3. The electronic device (100, 501, 601, 701, 1101) of claim 1, wherein the instructions, when executed by the processor, cause the electronic device (100, 501, 601, 701, 1101) to, when selection of an indicator (591a, 591b) capable of simultaneously selecting a plurality of camera lenses (581, 583, 585) included in the camera module (149, 580, 1180) is detected in the second camera interface, divide the second area (A2) into a plurality of preview areas (581a, 583a, 585a) to correspond to the plurality of camera lenses (581, 583, 585), and display images received through the plurality of camera lenses (581, 583, 585) in the plurality of preview areas (581a, 583a, 585a), respectively.

4. The electronic device (100, 501, 601, 701, 1101) of claim 3, wherein the instructions, when executed by the processor, cause the electronic device (100, 501, 601, 701, 1101) to:
receive and display, in an activated preview area (581a, 583a, 585a) among the plurality of preview areas (581a, 583a, 585a), an image received from a camera lens (581, 583, 585) corresponding to the activated preview area (581a, 583a, 585a) at a basic frame rate configured for displaying a preview image; and
receive and display, in a deactivated preview area, images received from a camera lens (581, 583, 585) corresponding to the deactivated preview area (581a, 583a, 585a) at a frame rate lower than the basic frame rate, or display a still shot image or a thumbnail image of one of the images received from the camera lens (581, 583, 585) corresponding to the deactivated preview area (581a, 583a, 585a).

5. The electronic device (100, 501, 601, 701, 1101) of claim 4, wherein the instructions, when executed by the processor, cause the electronic device (100, 501, 601, 701, 1101) to capture an image of a preview area (581a, 583a, 585a) in which a selection of photographing button (593b, 593c) is detected among the plurality of preview areas (581a, 583a, 585a).

6. The electronic device (100, 501, 601, 701, 1101) of claim 1, wherein the instructions, when executed by the processor, cause the electronic device (100, 501, 601, 701, 1101) to:
display a plurality of indicators (591a, 591b) capable of selecting a plurality of camera lenses (581, 583, 585) included in the camera module (149, 580, 1180), respectively, in the second camera interface; and
display, in the second area (A2), an image received from a camera lens (581, 583, 585) corresponding to an indicator (591a, 591b) selected from among the plurality of indicators (591a, 591b).

7. The electronic device (100, 501, 601, 701, 1101) of claim 1, wherein the instructions, when executed by the processor, cause the electronic device (100, 501, 601, 701, 1101) to:
display a plurality of indicators capable of selecting a plurality of photographing modes, respectively, in the second camera interface; and
display, in the second area (A2), an image corresponding to a photographing mode corresponding to an indicator selected from among the plurality of indicators.

8. A method (900, 1000) for capturing an image in an electronic device, the method comprising:
when a camera application (901) is executed in a first state in which a first area of a flexible display is exposed and a second area of the flexible display extending from the first area is inserted into a housing which is at least partially formed of a transparent material, turning on the first area (A1), turning off the second area (A2) and displaying (903), in the first area, an image received through a camera module in a first camera interface; and
when switching to a second camera interface is selected (905, 1001), turning on the second area and switching to the second camera interface so as to display (1003), in the second area, the image received through the camera module.

9. The method (900, 1000) of claim 8, wherein the housing is configured such that at least a part of the housing facing the second area when the second area (A2) is inserted into the housing is formed of a transparent material or configured as an opening.

10. The method (900, 1000) of claim 8, further comprising:
when selection (1005) of an indicator capable of simultaneously selecting a plurality of camera lenses included in the camera module is detected in the second camera interface, dividing (1007) the second area into a plurality of preview areas to correspond to the plurality of camera lenses; and
displaying (1009) images received through the plurality of camera lenses in the plurality of preview areas, respectively.

11. The method (900, 1000) of claim 10, further comprising:
receiving and displaying (1009), in an activated preview area among the plurality of preview areas, an image received from a camera lens corresponding to the activated preview area at a basic frame rate configured for displaying a preview image; and
receiving and displaying (1009), in a deactivated preview area, images received from a camera lens corresponding to the deactivated preview area at a frame rate lower than the basic frame rate, or displaying a still shot image or a thumbnail image of one of the images received from the camera lens corresponding to the deactivated preview area.

12. The method (900, 1000) of claim 11, further comprising capturing (1011) an image of a preview area in which selection of a photographing button is detected among the plurality of preview areas.

13. The method (900, 1000) of claim 8, further comprising:
displaying a plurality of indicators capable of selecting a plurality of camera lenses included in the camera module, respectively, in the second camera interface; and
displaying (1009), in the second area (A2), an image received from a camera lens corresponding to an indicator selected from among the plurality of indicators.

14. The method (900, 1000) of claim 8, further comprising:
displaying a plurality of indicators capable of selecting a plurality of photographing modes, respectively, in the second camera interface; and
displaying, in the second area, an image corresponding to a photographing mode corresponding to an indicator selected from among the plurality of indicators.

## Patentansprüche

1. Elektronische Vorrichtung (100, 501, 601, 701, 1101), umfassend:
ein Kameramodul (149, 580, 1180);
ein Gehäuse (102), das zumindest teilweise aus einem transparenten Material gebildet ist;
eine flexible Anzeige (103, 560, 1160);
einen Prozessor (120, 520, 1120); und
einen Speicher (530, 1130), der Anweisungen speichert, die bei Ausführung durch den Prozessor (120, 520, 1120) die elektronische Vorrichtung (100, 501, 601, 701, 1101) zu Folgendem veranlassen:
wenn eine Kameraanwendung in einem ersten Zustand ausgeführt wird, in dem ein erster Bereich (A1) der flexiblen Anzeige (103, 560, 1160) freigelegt ist und ein zweiter Bereich (A2) der flexiblen Anzeige, der sich von dem ersten Bereich (A1) aus erstreckt, in das Gehäuse (102) eingeführt ist, Einschalten des ersten Bereichs (A1), Ausschalten des zweiten Bereichs (A2) und Anzeigen, in dem ersten Bereich, eines Bildes, das durch das Kameramodul (149, 580, 1180) in einer ersten Kameraschnittstelle empfangen wird; und
wenn das Umschalten auf eine zweite Kameraschnittstelle ausgewählt ist, Einschalten des zweiten Bereichs (A2) und Umschalten auf die zweite Kameraschnittstelle, um das Bild, das durch das Kameramodul (149, 580, 1180) empfangen wird, in dem zweiten Bereich (A2) anzuzeigen.

2. Elektronische Vorrichtung (100, 501, 601, 701, 1101) nach Anspruch 1, wobei das Gehäuse (102) so konfiguriert ist, dass zumindest ein Teil des Gehäuses (102), der dem zweiten Bereich (A2) zugewandt ist, wenn der zweite Bereich (A2) in das Gehäuse (102) eingeführt ist, aus einem transparenten Material gebildet ist oder als eine Öffnung konfiguriert ist.

3. Elektronische Vorrichtung (100, 501, 601, 701, 1101) nach Anspruch 1, wobei die Anweisungen bei Ausführung durch den Prozessor die elektronische Vorrichtung (100, 501, 601, 701, 1101) dazu veranlassen, wenn eine Auswahl eines Indikators (591a, 591b), der in der Lage ist, gleichzeitig eine Vielzahl von Kameraobjektiven (581, 583, 585) auszuwählen, die in dem Kameramodul (149, 580, 1180) beinhaltet sind, in der zweiten Kameraschnittstelle erfasst wird, den zweiten Bereich (A2) in eine Vielzahl von Vorschaubereichen (581a, 583a, 585a) zu unterteilen, um der Vielzahl von Kameraobjektiven (581, 583, 585) zu entsprechen, und jeweils Bilder, die durch die Vielzahl von Kameraobjektiven (581, 583, 585) empfangen werden, in der Vielzahl von Vorschaubereichen (581a, 583a, 585a) anzuzeigen.

4. Elektronische Vorrichtung (100, 501, 601, 701, 1101) nach Anspruch 3, wobei die Anweisungen bei Ausführung durch den Prozessor die elektronische Vorrichtung (100, 501, 601, 701, 1101) zu Folgendem veranlassen:
Empfangen und Anzeigen, in einem aktivierten Vorschaubereich (581a, 583a, 585a) unter der Vielzahl von Vorschaubereichen (581a, 583a, 585a), eines Bildes, das von einem Kameraobjektiv (581, 583, 585) empfangen wird, das dem aktivierten Vorschaubereich (581a, 583a, 585a) entspricht, mit einer Grundbildrate, die zum Anzeigen eines Vorschaubildes konfiguriert ist; und
Empfangen und Anzeigen, in einem deaktivierten Vorschaubereich, von Bildern, die von einem Kameraobjektiv (581, 583, 585) empfangen werden, das dem deaktivierten Vorschaubereich (581a, 583a, 585a) entspricht, mit einer Bildrate, die niedriger als die Grundbildrate ist, oder Anzeigen eines Standbildes oder eines Miniaturbildes eines der Bilder, die von dem Kameraobjektiv (581, 583, 585) empfangen werden, das dem deaktivierten Vorschaubereich (581a, 583a, 585a) entspricht.

5. Elektronische Vorrichtung (100, 501, 601, 701, 1101) nach Anspruch 4, wobei die Anweisungen bei Ausführung durch den Prozessor die elektronische Vorrichtung (100, 501, 601, 701, 1101) dazu veranlassen, ein Bild eines Vorschaubereichs (581a, 583a, 585a) aufzunehmen, in dem eine Auswahl einer Fotografiertaste (593b, 593c) unter der Vielzahl von Vorschaubereichen (581a, 583a, 585a) erfasst wird.

6. Elektronische Vorrichtung (100, 501, 601, 701, 1101) nach Anspruch 1, wobei die Anweisungen bei Ausführung durch den Prozessor die elektronische Vorrichtung (100, 501, 601, 701, 1101) zu Folgendem veranlassen:
Anzeigen einer Vielzahl von Indikatoren (591a, 591b), die in der Lage sind, eine Vielzahl von Kameraobjektiven (581, 583, 585) auszuwählen, die jeweils in dem Kameramodul (149, 580, 1180) in der zweiten Kameraschnittstelle beinhaltet sind; und
Anzeigen, in dem zweiten Bereich (A2), eines Bildes, das von einem Kameraobjektiv (581, 583, 585) empfangen wird, das einem Indikator (591a, 591b) entspricht, der aus der Vielzahl von Indikatoren (591a, 591b) ausgewählt ist.

7. Elektronische Vorrichtung (100, 501, 601, 701, 1101) nach Anspruch 1, wobei die Anweisungen bei Ausführung durch den Prozessor die elektronische Vorrichtung (100, 501, 601, 701, 1101) zu Folgendem veranlassen:
Anzeigen einer Vielzahl von Indikatoren, die in der Lage sind, jeweils eine Vielzahl von Fotografiermodi auszuwählen, in der zweiten Kameraschnittstelle; und
Anzeigen, in dem zweiten Bereich (A2), eines Bildes, das einem Fotografiermodus entspricht, der einem Indikator entspricht, der aus der Vielzahl von Indikatoren ausgewählt ist.

8. Verfahren (900, 1000) zum Aufnehmen eines Bildes in einer elektronischen Vorrichtung, wobei das Verfahren Folgendes umfasst:
wenn eine Kameraanwendung (901) in einem ersten Zustand ausgeführt wird, in dem ein erster Bereich einer flexiblen Anzeige freigelegt ist und ein zweiter Bereich der flexiblen Anzeige, der sich von dem ersten Bereich aus erstreckt, in ein Gehäuse eingeführt ist, das zumindest teilweise aus einem transparenten Material gebildet ist, Einschalten des ersten Bereichs (A1), Ausschalten des zweiten Bereichs (A2) und Anzeigen (903), in dem ersten Bereich, eines Bildes, das durch ein Kameramodul in einer ersten Kameraschnittstelle empfangen wird; und
wenn das Umschalten auf eine zweite Kameraschnittstelle ausgewählt ist (905, 1001), Einschalten des zweiten Bereichs und Umschalten auf die zweite Kameraschnittstelle, um in dem zweiten Bereich das Bild anzuzeigen (1003), das durch das Kameramodul empfangen wird.

9. Verfahren (900, 1000) nach Anspruch 8, wobei das Gehäuse so konfiguriert ist, dass zumindest ein Teil des Gehäuses, der dem zweiten Bereich zugewandt ist, wenn der zweite Bereich (A2) in das Gehäuse eingeführt ist, aus einem transparenten Material gebildet ist oder als eine Öffnung konfiguriert ist.

10. Verfahren (900, 1000) nach Anspruch 8, ferner umfassend:
wenn eine Auswahl (1005) eines Indikators, der in der Lage ist, gleichzeitig eine Vielzahl von Kameraobjektiven auszuwählen, die in dem Kameramodul beinhaltet sind, in der zweiten Kameraschnittstelle erfasst wird, Unterteilen (1007) des zweiten Bereichs in eine Vielzahl von Vorschaubereichen, um der Vielzahl von Kameraobjektiven zu entsprechen; und
Anzeigen (1009) von Bildern, die durch die Vielzahl von Kameraobjektiven empfangen werden, jeweils in der Vielzahl von Vorschaubereichen.

11. Verfahren (900, 1000) nach Anspruch 10, ferner umfassend:
Empfangen und Anzeigen (1009), in einem aktivierten Vorschaubereich unter der Vielzahl von Vorschaubereichen, eines Bildes, das von einem Kameraobjektiv empfangen wird, das dem aktivierten Vorschaubereich entspricht, mit einer Grundbildrate, die zum Anzeigen eines Vorschaubildes konfiguriert ist; und
Empfangen und Anzeigen (1009), in einem deaktivierten Vorschaubereich, von Bildern, die von einem Kameraobjektiv empfangen werden, das dem deaktivierten Vorschaubereich entspricht, mit einer Bildrate, die niedriger als die Grundbildrate ist, oder Anzeigen eines Standbildes oder eines Miniaturbildes eines der Bilder, die von dem Kameraobjektiv empfangen werden, das dem deaktivierten Vorschaubereich entspricht.

12. Verfahren (900, 1000) nach Anspruch 11, ferner umfassend das Aufnehmen (1011) eines Bildes eines Vorschaubereichs, in dem eine Auswahl einer Fotografiertaste unter der Vielzahl von Vorschaubereichen erfasst wird.

13. Verfahren (900, 1000) nach Anspruch 8, ferner umfassend:
Anzeigen einer Vielzahl von Indikatoren, die in der Lage sind, eine Vielzahl von Kameraobjektiven auszuwählen, die jeweils in dem Kameramodul in der zweiten Kameraschnittstelle beinhaltet sind; und
Anzeigen (1009), in dem zweiten Bereich (A2), eines Bildes, das von einem Kameraobjektiv empfangen wird, das einem Indikator entspricht, der aus der Vielzahl von Indikatoren ausgewählt ist.

14. Verfahren (900, 1000) nach Anspruch 8, ferner umfassend:
Anzeigen einer Vielzahl von Indikatoren, die in der Lage sind, jeweils eine Vielzahl von Fotografiermodi auszuwählen, in der zweiten Kameraschnittstelle; und
Anzeigen, in dem zweiten Bereich, eines Bildes, das einem Fotografiermodus entspricht, der einem Indikator entspricht, der aus der Vielzahl von Indikatoren ausgewählt ist.

## Revendications

1. Dispositif électronique (100, 501, 601, 701, 1101) comprenant :
un module de caméra (149, 580, 1180) ;
un boîtier (102) qui est au moins partiellement formé d'un matériau transparent ;
un dispositif d'affichage flexible (103, 560, 1160) ;
un processeur (120, 520, 1120) ; et
une mémoire (530, 1130) stockant des instructions qui, lorsqu'elles sont exécutées par le processeur (120, 520, 1120), amènent le dispositif électronique (100, 501, 601, 701, 1101) à :
lorsqu'une application de caméra est exécutée dans un premier état où une première zone (A1) du dispositif d'affichage flexible (103, 560, 1160) est exposée et une seconde zone (A2) du dispositif d'affichage flexible s'étendant à partir de la première zone (A1) est insérée dans le boîtier (102), allumer la première zone (A1), éteindre la seconde zone (A2) et afficher, dans la première zone, une image reçue au travers du module de caméra (149, 580, 1180) dans une première interface de caméra ; et
lorsque le passage à une seconde interface de caméra est sélectionné, allumer la seconde zone (A2) et passer à la seconde interface de caméra de façon à afficher, dans la seconde zone (A2), l'image reçue au travers du module de caméra (149, 580, 1180).

2. Dispositif électronique (100, 501, 601, 701, 1101) de la revendication 1, dans lequel le boîtier (102) est conçu de sorte qu'au moins une partie du boîtier (102) faisant face à la seconde zone (A2) lorsque la seconde zone (A2) est insérée dans le boîtier (102) est formée d'un matériau transparent ou conçue comme une ouverture.

3. Dispositif électronique (100, 501, 601, 701, 1101) de la revendication 1, dans lequel les instructions, lorsqu'elles sont exécutées par le processeur, amènent le dispositif électronique (100, 501, 601, 701, 1101), lorsqu'une sélection d'un indicateur (591a, 591b) capable de sélectionner simultanément une pluralité d'objectifs de caméra (581, 583, 585) compris dans le module de caméra (149, 580, 1180) est détectée dans la seconde interface de caméra, à diviser la seconde zone (A2) en une pluralité de zones de prévisualisation (581a, 583a, 585a) pour correspondre à la pluralité d'objectifs de caméra (581, 583, 585), et à afficher des images reçues par la pluralité d'objectifs de caméra (581, 583, 585) dans la pluralité de zones de prévisualisation (581a, 583a, 585a), respectivement.

4. Dispositif électronique (100, 501, 601, 701, 1101) de la revendication 3, dans lequel les instructions, lorsqu'elles sont exécutées par le processeur, amènent le dispositif électronique (100, 501, 601, 701, 1101) à :
recevoir et afficher, dans une zone de prévisualisation (581a, 583a, 585a) activée parmi la pluralité de zones de prévisualisation (581a, 583a, 585a), une image reçue en provenance d'un objectif de caméra (581, 583, 585) correspondant à la zone de prévisualisation activée (581a, 583a, 585a) à une fréquence de trames de base conçue pour afficher une image de prévisualisation ; et
recevoir et afficher, dans une zone de prévisualisation désactivée, des images reçues en provenance d'un objectif de caméra (581, 583, 585) correspondant à la zone de prévisualisation désactivée (581a, 583a, 585a) à une fréquence de trames inférieure à la fréquence de trames de base, ou afficher une image fixe ou une image miniature de l'une des images reçues de l'objectif de caméra (581, 583, 585) correspondant à la zone de prévisualisation désactivée (581a, 583a, 585a).

5. Dispositif électronique (100, 501, 601, 701, 1101) de la revendication 4, dans lequel les instructions, lorsqu'elles sont exécutées par le processeur, amènent le dispositif électronique (100, 501, 601, 701, 1101) à capturer une image d'une zone de prévisualisation (581a, 583a, 585a) où une sélection de bouton de photographie (593b, 593c) est détectée parmi la pluralité de zones de prévisualisation (581a, 583a, 585a).

6. Dispositif électronique (100, 501, 601, 701, 1101) de la revendication 1, dans lequel les instructions, lorsqu'elles sont exécutées par le processeur, amènent le dispositif électronique (100, 501, 601, 701, 1101) à :
afficher une pluralité d'indicateurs (591a, 591b) capables de sélectionner une pluralité d'objectifs de caméra (581, 583, 585) compris dans le module de caméra (149, 580, 1180), respectivement, dans la seconde interface de caméra ; et
afficher, dans la seconde zone (A2), une image reçue en provenance d'un objectif de caméra (581, 583, 585) correspondant à un indicateur (591a, 591b) sélectionné parmi la pluralité d'indicateurs (591a, 591b).

7. Dispositif électronique (100, 501, 601, 701, 1101) de la revendication 1, dans lequel les instructions, lorsqu'elles sont exécutées par le processeur, amènent le dispositif électronique (100, 501, 601, 701, 1101) à :
afficher une pluralité d'indicateurs capables de sélectionner une pluralité de modes de photographie, respectivement, dans la seconde interface de caméra ; et
afficher, dans la seconde zone (A2), une image correspondant à un mode de photographie correspondant à un indicateur sélectionné parmi la pluralité d'indicateurs.

8. Procédé (900, 1000) permettant la capture d'une image dans un dispositif électronique, le procédé comprenant :
lorsqu'une application de caméra (901) est exécutée dans un premier état où une première zone d'un dispositif d'affichage flexible est exposée et une seconde zone du dispositif d'affichage flexible s'étendant à partir de la première zone est insérée dans un boîtier qui est au moins partiellement formé d'un matériau transparent, l'allumage de la première zone (A1), l'extinction de la seconde zone (A2) et l'affichage (903), dans la première zone, d'une image reçue au travers d'un module de caméra dans une première interface de caméra ; et
lorsque le passage à une seconde interface de caméra est sélectionné (905, 1001), l'allumage de la seconde zone et le passage à la seconde interface de caméra de façon à afficher (1003), dans la seconde zone, l'image reçue au travers du module de caméra.

9. Procédé (900, 1000) de la revendication 8, dans lequel le boîtier est conçu de sorte qu'au moins une partie du boîtier faisant face à la seconde zone lorsque la seconde zone (A2) est insérée dans le boîtier est formée d'un matériau transparent ou conçue comme une ouverture.

10. Procédé (900, 1000) de la revendication 8, comprenant en outre :
lorsqu'une sélection (1005) d'un indicateur capable de sélectionner simultanément une pluralité d'objectifs de caméra compris dans le module de caméra est détectée dans la seconde interface de caméra, la division (1007) de la seconde zone en une pluralité de zones de prévisualisation pour correspondre à la pluralité d'objectifs de caméra ; et
l'affichage (1009) d'images reçues au travers de la pluralité d'objectifs de caméra dans la pluralité de zones de prévisualisation, respectivement.

11. Procédé (900, 1000) de la revendication 10, comprenant en outre :
la réception et l'affichage (1009), dans une zone de prévisualisation activée parmi la pluralité de zones de prévisualisation, d'une image reçue en provenance d'un objectif de caméra correspondant à la zone de prévisualisation activée à une fréquence de trames de base conçue pour afficher une image de prévisualisation ; et
la réception et l'affichage (1009), dans une zone de prévisualisation désactivée, d'images reçues en provenance d'un objectif de caméra correspondant à la zone de prévisualisation désactivée à une fréquence de trames inférieure à la fréquence de trames de base, ou l'affichage d'une image fixe ou d'une image miniature de l'une des images reçues de l'objectif de caméra correspondant à la zone de prévisualisation désactivée.

12. Procédé (900, 1000) de la revendication 11, comprenant en outre la capture (1011) d'une image d'une zone de prévisualisation où la sélection d'un bouton de photographie est détectée parmi la pluralité de zones de prévisualisation.

13. Procédé (900, 1000) de la revendication 8, comprenant en outre :
l'affichage d'une pluralité d'indicateurs capables de sélectionner une pluralité d'objectifs de caméra compris dans le module de caméra, respectivement, dans la seconde interface de caméra ; et
l'affichage (1009), dans la seconde zone (A2), d'une image reçue en provenance d'un objectif de caméra correspondant à un indicateur sélectionné parmi la pluralité d'indicateurs.

14. Procédé (900, 1000) de la revendication 8, comprenant en outre :
l'affichage d'une pluralité d'indicateurs capables de sélectionner une pluralité de modes de photographie, respectivement, dans la seconde interface de caméra ; et
l'affichage, dans la seconde zone, d'une image correspondant à un mode de photographie correspondant à un indicateur sélectionné parmi la pluralité d'indicateurs.
